# EUROPÄISCHE PATENTANMELDUNG

(11) **EP 1 908 990 A2**
(43) Veröffentlichungstag der Anmeldung: **09.04.2008**
(21) Anmeldenummer: 07019397.4
(22) Anmeldetag: 04.10.2007
(51) Int. Cl.: F16H 25/22

(54) **Vorrichtung zur Umwandlung einer Drehbewegung in eine Axialbewegung**

(30) Priorität: 06.10.2006 DE 102006047790
(71) Anmelder: Wilhelm Narr Apparatebau GmbH & Co. KG, 73230 Kirchheim/Teck (DE)
(72) Erfinder: Langbein, Ulrich, 73230 Kirchheim/Teck (DE)
(74) Vertreter: Ruckh, Rainer Gerhard

(57) **Zusammenfassung**

Die Erfindung bezieht sich auf eine Vorrichtung zur Umwandlung einer Drehbewegung in eine Axialbewegung, oder umgekehrt, mit einem Antrieb, einer Gewindespindel, einer diese umgebenden Mutter mit Innenprofilierung und mit dazwischen angeordneten, profilierten Wälz- oder Rollkörpern, die endseitig in drehbaren Käfigen drehbar aufgenommen sind. Es ist eine Messeinrichtung vor gesehen, die die Differenzdrehbewegung zwischen dem Käfig und der Gewindespindel misst als Maß für die Axialbewegung zwischen der Gewindespindel und der Mutter.

## Beschreibung

Die Erfindung bezieht sich auf eine Vorrichtung zur Umwandlung einer Drehbewegung in eine Axialbewegung, oder umgekehrt, mit den Merkmalen im Oberbegriff des Anspruchs 1.

Für die Umwandlung von Drehbewegungen in Axialbewegungen mit hohem Wirkungsgrad werden häufig Wälzgewindetriebe verwendet, die eine Gewindespindel, eine diese umgebende Mutter und dazwischen angeordnete Wälzkörper aufweisen. Die Wälzbewegung derartiger Wälzgewindetriebe zwischen der Mutter, den Wälzkörpern und der Gewindespindel ist vergleichbar etwa mit der Bewegung der einzelnen Elemente eines Reibradgetriebes. Wie bei einem derartigen Reibradgetriebe so entsteht auch bei genannten Wälzgewindetrieben ein Schlupf. Bei den meisten Gewindetrieben hat der Schlupf keinen Einfluss auf die Bewegungsumwandlung. Bei aus DE 37 39 059 A1 und DE 28 07 952 A1 bekannten Gewindetrieben bewirkt der Schlupf eine Veränderung der effektiven Steigung. Dies lässt sich folgendermaßen erklären. Die Steigung der Gewindespindel wird nicht durch die Mutter nachgebildet, sondern durch den Versatz der Feinrillen von Wälzkörper zu Wälzkörper. Daher ist nicht die Relativdrehbewegung von Mutter zu Gewindespindel für den Vorschub entscheidend, sondern die Relativdrehbewegung zwischen dem Käfig der Wälzkörper und der Gewindespindel. Die Relativgeschwindigkeiten zwischen den Komponenten dieses Gewindetriebes, das heißt zwischen der Mutter, dem Käfig der Wälzkörper und der Spindel, sind abhängig vom Schlupf. Ein derartiger Schlupf würde bei einem Gewindetrieb gemäß DE 37 39 059 A1 zu einem Positionierfehler führen. Aus EP 168942 A1 und DE 195 40 634 C1 ist ein Vorschlag zur Verhinderung eines Positionierfehlers ersichtlich. Danach ist vorgesehen, nicht die Mutter anzutreiben, sondern den Planetenkäfig bzw. bei angetriebener Gewindespindel nicht die Mutter gegen Verdrehung zu sichern, sondern den Planetenkäfig. Dabei ist der Planetenkäfig als Mutter ausgeführt. Die eigentliche Mutter sitzt im Käfig und wird durch ein Axiallager drehbar gelagert. Ein Nachteil einer solchen Gestaltung mit angetriebenem Planetenkäfig liegt darin, dass zusätzlich zu dem Axiallager, welches ohnehin notwendig ist, um den Gewindetrieb zu lagern, noch ein zusätzliches Axiallager in der Mutter vorhanden ist. Dieses zusätzliche Lager benötigt zusätzlichen Bauraum und erzeugt zusätzliche Verlustreibung, die den Gesamtwirkungsgrad verschlechtert.

Der Erfindung liegt die Aufgabe zugrunde, eine Vorrichtung zur Umwandlung einer Drehbewegung in eine Axialbewegung zu schaffen, die die Möglichkeit -bietet, einen Schlupf zu kompensieren, ohne ein zusätzliches Axiallager in der Mutter auskommt und ansonsten einfach, kompakt und kostengünstig ist.

Die Aufgabe ist bei einer Vorrichtung der eingangs genannten Art gemäß der Erfindung durch die Merkmale im Anspruch 1 gelöst. Hierbei wird entweder die Mutter oder die Gewindespindel vom Antrieb angetrieben. Geregelt wird dabei die Relativbewegung zwischen dem Käfig der Wälz- oder Rollkörper und der Gewindespindel. Aufgrund dieser Gestaltung der Vorrichtung ist in einfacher Weise eine Schlupfkompensation bei einem nicht steigungstreuen Gewindetrieb verwirklicht, bei dem die Steigung durch die Wälz- oder Rollkörper gebildet wird. Eine Vorrichtung dieser Art ist außerordentlich vielseitig einsetzbar und eignet sich für alle Fälle, bei denen eine Drehbewegung in eine Axialbewegung, oder umgekehrt, umgewandelt werden soll, insbesondere z.B. axiale Stellbewegungen und Stellkräfte von entsprechenden Stellgliedern erzeugt werden sollen.

Eine vorteilhafte Ausführungsform sieht einen geregelten Antrieb vor, der das Signal der Messeinrichtung zur Regelung der Axialbewegung verwendet. Vorteilhaft kann es sein, wenn der Antrieb bei undrehbar und axial verschiebbar gehaltener Gewindespindel die Mutter drehbar antreibt oder wenn statt dessen der Antrieb bei undrehbar und axial verschiebbar gehaltener Mutter die Gewindespindel drehbar antreibt. Im erstgenannten Fall der drehbar angetriebenen Mutter kann es vorteilhaft sein, wenn die Messeinrichtung einen am Käfig der Wälz- oder Rollkörper angreifenden, die Drehbewegung dieses Käfigs erfassenden Drehgeber aufweist, dessen Ausgangssignal ein Maß für die Axialverschiebung der Gewindespindel ist. Hierbei ergibt sich der Vorteil, dass die Mutter und damit auch der Käfig ortsfest bleiben und in einfacher Weise der Drehgeber am Käfig angebracht werden kann. Da die Gewindespindel sich nicht dreht, liefert der Drehgeber direkt die Relativbewegung.

Bei einer anderen vorteilhaften Ausführungsform, bei der die Gewindespindel drehbar angetrieben wird, kann es von Vorteil sein, wenn die Messeinrichtung einen am Käfig der Wälz- oder Rollkörper angreifenden, dessen Drehbewegung erfassenden Drehgeber und ferner einen die Drehbewegung der Gewindespindel erfassenden Drehgeber aufweist, wobei die Differenz der Ausgangssignale beider Drehgeber ein Maß für die Axialverschiebung der Mutter ist. Der die Drehbewegung der Gewindespindel erfassende Drehgeber kann hierbei in besonders einfacher Weise von dem Motordrehgeber des Antriebes gebildet sein.

Weitere Einzelheiten und Vorteile der Erfindung ergeben sich aus der nachfolgenden Beschreibung.

Die Erfindung ist nachfolgend anhand von in den Zeichnungen gezeigten Ausführungsbeispielen näher erläutert. Es zeigen:
- Fig. 1: eine schematische, teilweise geschnittene Seitenansicht einer Vorrichtung zur Umwandlung einer Drehbewegung in eine Axialbewegung, gemäß einem ersten Ausführungsbeispiel,
- Fig. 2: eine schematische Seitenansicht der Vorrichtung gemäß dem ersten Ausführungsbeispiel mit Regeleinrichtung,
- Fig. 3: eine schematische Seitenansicht entsprechend derjenigen in Fig. 2 einer Vorrichtung gemäß einem zweiten Ausführungsbeispiel.

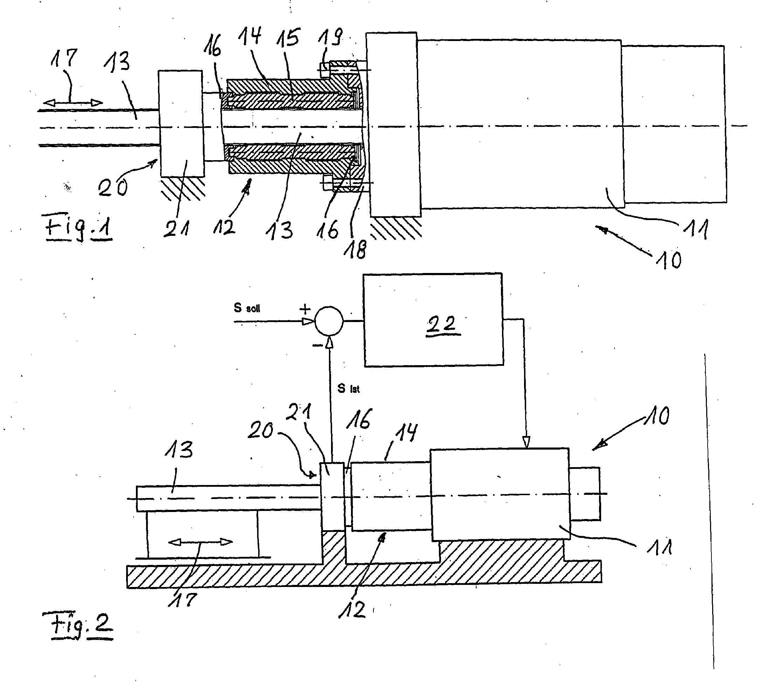

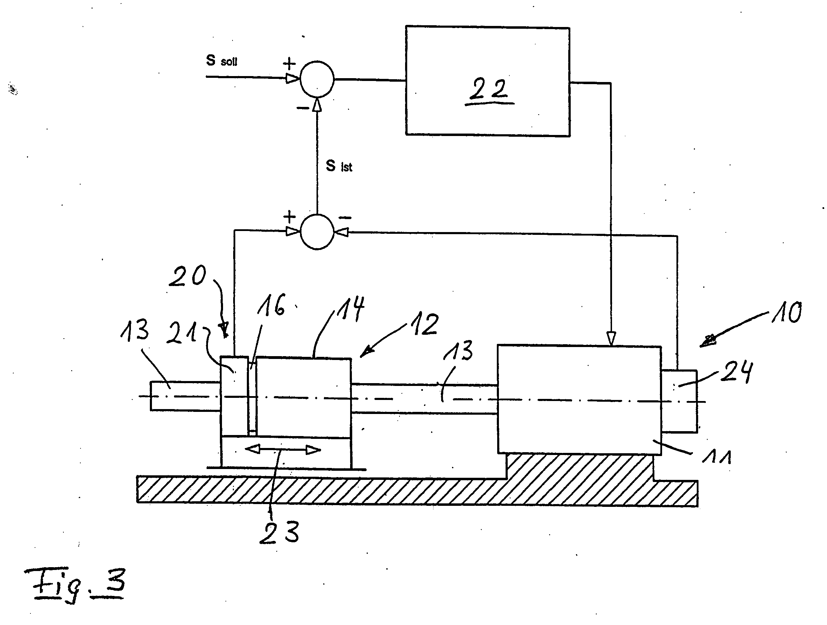

In Fig. 1 und 2 ist schematisch eine Vorrichtung 10 gezeigt, die zur Umwandlung einer Drehbewegung in eine Axialbewegung, oder umgekehrt, geeignet ist. Die Vorrichtung 10 weist einen Antrieb 11 auf, der z.B. als geregelter Antrieb und hierbei insbesondere z.B. als elektrischer Servomotor ausgebildet sein kann. Auch andere Ausführungsformen eines derartigen Antriebes 11 liegen im Rahmen der Erfindung. Die Vorrichtung 10 weist ferner einen Gewindetrieb 12 bekannter Bauart (DE 37 39 059 A1) auf, mit einer Gewindespindel 13, einer die Gewindespindel 13 umgebenden Mutter 14 mit Innenprofilierung und mit in Radialrichtung zwischen der Gewindespindel 13 und der Mutter 14 angeordneten profilierten Wälz- oder Rollkörpern 15, die endseitig in drehbaren Käfigen 16 drehbar aufgenommen sind.

Die Vorrichtung 10 weist eine Messeinrichtung 20 auf, die die Differenzdrehbewegung zwischen dem Käfig 16 und der Gewindespindel 13 misst als Maß für die Axialbewegung zwischen der Gewindespindel 13 und der Mutter 14. Der Antrieb 11 kann ein geregelter Antrieb sein, der das Ausgangssignal der Messeinrichtung 20 für die Regelung der Axialbewegung verwendet.

Beim ersten Ausführungsbeispiel gemäß Fig. 1 und 2 ist die Gewindespindel 13 undrehbar gehalten und axial in Pfeilrichtung 17 verschiebbar geführt. Bei dieser Ausführungsform wird die Mutter 14 vom Antrieb 11 drehbar angetrieben. Der Antrieb 11 weist eine Hohlwelle 18 auf, mit der die Mutter 14 zur Drehmitnahme z.B. mittels angedeuteter Schrauben 19 verbunden ist. Die Gewindespindel 13 ist gegen Verdrehung gesichert und in Pfeilrichtung 17 linear geführt. Die Mutter 14 und der Käfig 16 sind in Bezug auf die verschiebbare Gewindespindel 13 ortsfest.

Die Messeinrichtung 20 weist einen Drehgeber 21 auf, der am Käfig 16 angreift und dessen Drehbewegung erfasst. Das Ausgangssignal des Drehgebers 21 ist ein Maß für die Axialverschiebung der Gewindespindel 13. Dieses Ausgangssignal Sist des Drehgebers 21 wird direkt einem Soll-Ist-Vergleich und die sich ergebende Regelabweichung einer schematisch angedeuteten Regeleinrichtung 22 zugeführt, die z.B. aus einem Servorregler gebildet ist und deren Ausgang zum Antrieb 11, z.B. in Gestalt eines Servomotors, geführt ist.

Die Vorrichtung 10 gemäß dem ersten Ausführungsbeispiel in Fig. 1 und 2 ist besonders einfach, kompakt und kostengünstig. Die Mutter 14 und der Käfig 16 bleiben ortsfest, wobei der Drehgeber 21, der am Käfig 16 angreift, ebenfalls ortsfest bleibt. Da die Gewindespindel 13 sich nicht dreht, liefert der Drehgeber 21 direkt ein Ausgangssignal als Maß für die Axialverschiebung der Gewindespindel 13.

Bei dem in Fig. 3 gezeigten zweiten Ausführungsbeispiel sind für die Teile, die dem ersten Ausführungsbeispiel entsprechen, gleiche Bezugszahlen verwendet, so dass dadurch auf die Beschreibung des ersten Ausführungsbeispieles Bezug genommen ist. Das zweite Ausführungsbeispiel gemäß Fig. 3 unterscheidet sich vom ersten Ausführungsbeispiel dadurch, dass in Fig. 3 die Gewindespindel 13 vom. Antrieb 11 drehbar angetrieben ist und die Mutter 14 gegen Verdrehen gesichert und undrehbar gehalten und dabei axial verschiebbar ist in Pfeilrichtung 23. Auch bei diesem Ausführungsbeispiel ist die Messeinrichtung 20 so gestaltet, dass diese die Differenzdrehbewegung zwischen dem Käfig 16 und der Gewindespindel 13 misst als Maß für die Axialbewegung zwischen der Gewindespindel 13 und der Mutter 14. Der geregelte Antrieb 11 verwendet das Signal der Messeinrichtung 20 zur Regelung der Axialbewegung in Pfeilrichtung 23. Die Messeinrichtung 20 weist zusätzlich zum Drehgeber 21, der am Käfig 16 angreift und dessen Drehbewegung erfasst, einen weiteren Drehgeber 24 auf, der die Drehbewegung der Gewindespindel 13 erfasst. Dieser zweite Drehgeber 24 kann an irgend einer geeigneten Stelle angeordnet sein, wo er die Drehbewegung der Gewindespindel 13 erfassen kann. Von Vorteil kann es sein, wenn dieser Drehgeber vom Motordrehgeber des geregelten Antriebes 11, z.B. in Gestalt eines Servomotors, gebildet ist. Die Ausgangssignale beider Drehgeber 21 und 24 werden verarbeitet, wobei die Differenz dieser beiden Ausgangssignale ein Maß für die Axialverschiebung der Mutter 14 in Pfeilrichtung 23 ist. Dieser IstWert Sist der Axialverschiebung der Mutter 14 wird einem Soll-Ist-Vergleich zugeführt, wobei die sich ergebende Regelabweichung einer Regeleinrichtung 22 z.B. in Form eines Servoreglers zugeführt wird, die mit dem Antrieb 11 in Verbindung steht oder, wie beim ersten Ausführungsbeispiel auch, Bestandteil des als z.B. Servomotor ausgebildeten Antriebes 11 sein kann.

## Patentansprüche

1. Vorrichtung zur Umwandlung einer Drehbewegung in eine Axialbewegung, oder umgekehrt, mit einem Antrieb (11), einer Gewindespindel (13), einer diese umgebenden Mutter (14) mit Innenprofilierung und mit dazwischen angeordneten profilierten Wälz- oder Rollkörpern (15), die endseitig in drehbaren Käfigen (16) drehbar aufgenommen sind,
**gekennzeichnet durch**
eine Messeinrichtung (20), die die Differenzdrehbewegung zwischen dem Käfig (16) und der Gewindespindel (13) misst als Maß für die Axialbewegung zwischen der Gewindespindel (13) und der Mutter (14).

2. Vorrichtung nach Anspruch 1,
**gekennzeichnet durch**
einen geregelten Antrieb (11), der das Signal der Messeinrichtung (20) zur Regelung der Axialbewegung verwendet.

3. Vorrichtung nach Anspruch 1 oder 2,
**dadurch gekennzeichnet,**
**dass** der Antrieb (11) bei undrehbar und axial verschiebbar gehaltener Gewindespindel (13) die Mutter (14) drehbar antreibt.

4. Vorrichtung nach Anspruch 1 oder 2,
**dadurch gekennzeichnet,**
**dass** der Antrieb (11) bei undrehbar und axial verschiebbar gehaltener Mutter (14) die Gewindespindel (13) drehbar antreibt.

5. Vorrichtung nach Anspruch 3,
**dadurch gekennzeichnet,**
**dass** die Messeinrichtung (20) einen am Käfig (16) angreifenden, dessen Drehbewegung erfassenden Drehgeber (21) aufweist, dessen Ausgangssignal ein Maß für die Axialverschiebung der Gewindespindel. (13) ist.

6. Vorrichtung nach Anspruch 4,
**dadurch gekennzeichnet ,**
**dass** die Messeinrichtung (20) einen am Käfig (16) angreifenden, dessen Drehbewegung erfassenden Drehgeber (21) und einen die Drehbewegung - der Gewindespindel (13) erfassenden Drehgeber (24) aufweist und dass die Differenz der Ausgangssignale beider Drehgeber (21,24) ein Maß für die Axialverschiebung der Mutter (14) ist.

7. Vorrichtung nach Anspruch 6,
**dadurch gekennzeichnet ,**
**dass** der die Drehbewegung der Gewindespindel (13) erfassende Drehgeber (24) von dem Motordrehgeber des Antriebes (11) gebildet ist.
